# EUROPÄISCHE PATENTSCHRIFT

(11) **EP 3 512 388 B1**
(45) Veröffentlichungstag und Bekanntmachung des Hinweises auf die Patenterteilung: **22.01.2020**
(21) Anmeldenummer: 17787422.9
(22) Anmeldetag: 23.10.2017
(51) Int. Cl.: A47J 31/46

(54) **GERÄT ZUR AUSGABE UND/ODER HERSTELLUNG VON GETRÄNKEN**
APPLIANCE FOR DISPENSING AND/OR PREPARING BEVERAGES
APPAREIL DE DISTRIBUTION ET/OU DE PRODUCTION DE BOISSONS

(30) Priorität: 28.10.2016 DE 102016120652; 28.10.2016 DE 102016120653
(43) Veröffentlichungstag der Anmeldung: 24.07.2019
(73) Patentinhaber: Schultes, Bernhard, 63741 Aschaffenburg, Bayern (DE)
(72) Erfinder: Schultes, Bernhard, 63741 Aschaffenburg, Bayern (DE)
(74) Vertreter: Stiel, Jürgen
(86) Internationale Anmeldenummer: PCT/EP2017/077034
(87) Internationale Veröffentlichungsnummer: WO 2018/077817

(56) Entgegenhaltungen:
- EP-A1- 0 600 826
- EP-A1- 3 020 312

## Beschreibung

Die Erfindung betrifft Geräte zur Ausgabe und/oder Herstellung von Getränken, insbesondere eine Kaffeemaschine, gemäß den Merkmalen der Ansprüche 1 bis 15.

Ein Einspeisungsbauteil für Gase und Flüssigkeiten, welches es innerhalb des Einspeisungsbauteils ermöglicht, über den Flüssigkeitsdruck den Gasstrom freizugeben, um zum Beispiel C0₂ und Leitungswasser in einen Rohrsiebkarbonator einzuspeisen, ist aus der WO 2002/038488 A1 bekannt.

Die WO 2007/141339 A1 betrifft eine Vorrichtung für die Anreicherung eines Flüssigkeitsstroms mit einem Gas.

Die DE 10 2011 001 252 A1 offenbart ein Verfahren zur portionsweisen Herstellung von wasserbasierten, karbonisierten Postmix-Getränken zum direkten Verbrauch.

Durch die DE 10 2006 014 814 A1 ist ein Imprägnierer zum Versetzen einer Flüssigkeit mit Gas mit einer rohrförmigen Mischzelle bekannt. Dabei ist in der Mischzelle zumindest ein Imprägnierkörper angeordnet.

DE 10 2010 023 781 A1 offenbart eine Vorrichtung zum Schäumen einer Flüssigkeit.

DE 20 2009 007 945 U1 offenbart ein Verfahren zum Reinigen einer Vorrichtung zum Schäumen von Milch.

DE 602 06 041 T2 betrifft eine Vorrichtung zur Zubereitung eines zum Verzehr geeigneten Getränkes mit einer Schaumschicht.

Die EP 0 600 826 A1 offenbart ein Gerät zur Ausgabe von Getränken, mit einer ersten Quelle 34 für eine Flüssigkeit (Milch), mit einer zweiten Quelle 54 für ein Gas (Luft), mit einem Mischer 20 und mit einem Auslassventil 46, wobei der Mischer mit der ersten Quelle für die Flüssigkeit und der zweiten Quelle für das Gas verbunden ist, wobei der Mischer ein Gehäuse 26 und ein mehrere Öffnungen aufweisendes Element 27 aufweist, wobei ein ausgangsseitiges Ende des Mischers mit einer Öffnung einer Stirnwand eines Gehäuses 30 des Gerätes zusammenwirkt und gegenüberliegend angeordnet ist.

Der Erfindung liegt die Aufgabe zugrunde, Geräte zur Ausgabe und/oder Herstellung von Getränken zu schaffen.

Die Aufgabe wird erfindungsgemäß durch die Merkmale der Ansprüche 1 bis 15 gelöst.

Das erfindungsgemäße Geräte zur Ausgabe und/oder Herstellung von Getränken, insbesondere Kaffeemaschine, beinhaltet mindestens eine erste Quelle für eine Flüssigkeit, insbesondere Kaffee, mindestens eine zweite Quelle für ein Gas, insbesondere Luft, mindestens einen Mischer und mindestens ein Auslassventil, wobei der Mischer mit der mindestens einen ersten Quelle für die Flüssigkeit und der mindestens einen zweiten Quelle für das Gas verbunden ist.

Durch den kompakten Aufbau des Mischers vorzugsweise in Zusammenhang mit einem Auslassventil und/oder Rückschlagventilen und/oder Modulen wird eine sichere Funktion und/oder einfache Reinigung erreicht, da insbesondere kurze Wege und kleine Räume vorgesehen sind. Zudem ist das Gerät einfach herzustellen, zu montieren und zu warten. Durch die vorteilhafte Verwendung von Modulen in dem Mischer ist dieser einfach zu montieren, demontieren und/oder zu reinigen.

Auch ist der Mischer leicht an die Bedürfnisse eines Anwenders und/oder an die Eigenschaften des Getränkes anpassbar, insbesondere durch die Anzahl und/oder Art der Module.

Durch die Anordnung von Rückschlagventilen an dem Mischer wird die Reinigung des Mischers verbessert, da der Mischer totraumfrei ist.

Durch die Anordnung des Mischers an einer Stirnwand eines Gehäuses des Gerätes kann der Mischer einfach gewartet werden, ohne dass beispielsweise ein Bediener in das Innere des Gehäuses eingreifen muss.

Beim Reinigungsvorgang wird eine Reinigungslösung von einer Pumpe angesaugt, durch den Kühler geleitet und flüssigkeitsseitig in den Mischer eingespritzt. Vorzugsweise dringt die Reinigungslösung auch in das Rückschlagventil gasseitig ein.

Somit werden auch die mit Flüssigkeit benetzten Teile des gasseitigen Rückschlagventils gereinigt.

Ausführungsbeispiele der Erfindung sind in den Zeichnungen dargestellt und werden im Folgenden näher beschrieben.

Es zeigen:

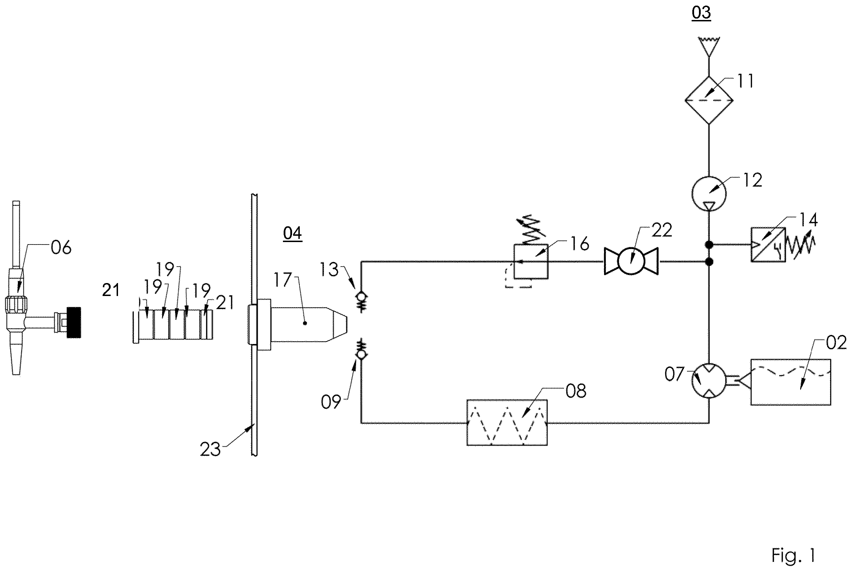

- Fig. 1: Schematische Darstellung eines Ausführungsbeispiels eines Gerätes zur Ausgabe und/oder Herstellung von Getränken;

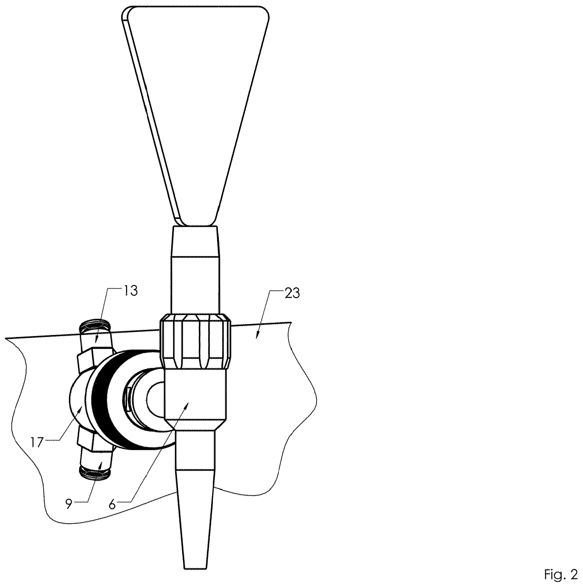

- Fig. 2: eine schematische Darstellung eines Mischers mit Zapfhahn;

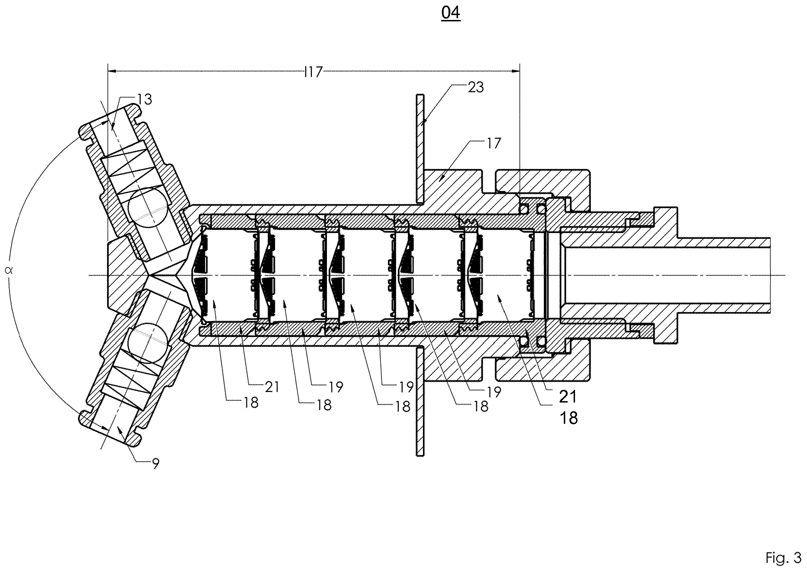

- Fig. 3: eine schematische Darstellung eines Querschnittes des Mischers;

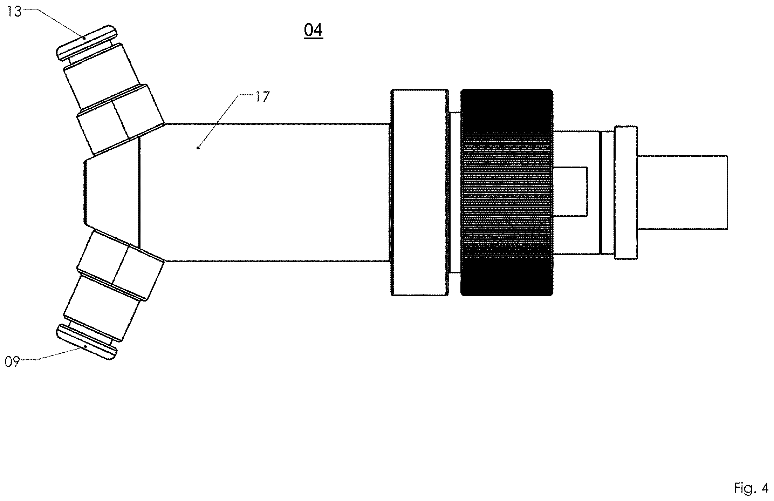

- Fig. 4: eine schematische Darstellung einer Draufsicht des Mischers.

Ein Gerät 01 zur Ausgabe und/oder Herstellung von Getränken, insbesondere eine Kaffeemaschine 01, weist mindestens eine erste Quelle 02 für eine Flüssigkeit, beispielsweise Aromastoffe aufweisende Flüssigkeit, vorzugsweise Wasser, insbesondere Kaffee, mindestens eine zweite Quelle 03 für ein Gas, beispielsweise Stickstoff und/oder Kohlendioxid aufweisendes Gas, insbesondere Luft, mindestens einen Mischer 04 und mindestens ein Auslassventil 06, beispielsweise einen Zapfhahn 06 auf. Der Mischer 04 ist mit der mindestens einen ersten Quelle 02 für die Flüssigkeit und der mindestens einen zweiten Quelle 03 für das Gas verbunden. Die mindestens eine erste Quelle 02 für die Flüssigkeit ist beispielsweise als Behälter, insbesondere als Bag-in-Box ausgeführt. Zwischen der mindestens einen ersten Quelle 02 für die Flüssigkeit und dem Mischer 04 sind beispielsweise mindestens eine Pumpe 07, mindestens ein Wärmetauscher 08, insbesondere Kühler 08, und ein Rückschlagventil 09, insbesondere Drosselrückschlagventil 09, angeordnet.

Zwischen der mindestens einen zweiten Quelle 03 für das Gas und dem Mischer 04 sind beispielsweise mindestens ein Filter 11, mindestens ein Kompressor 12, vorzugsweise ein Ventil 22 und ein Rückschlagventil 13, insbesondere Drosselrückschlagventil 13 angeordnet. Zusätzlich kann dem Kompressor 12 ein Druckschalter 14 und/oder ein Druckregelventil 16 nachgeordnet sein. Insbesondere ist der Kompressor 12 elektrisch, z.B. mittels eines Elektromotors angetrieben. Vorzugsweise ist der Kompressor 12 mit der Pumpe 07 für die Flüssigkeit verbunden, d.h. die Pumpe 07 ist vorzugsweise pneumatisch betätigt und/oder ist eine Membranpumpe. Vorzugsweise wird der Kompressor 12 in Abhängigkeit des Druckschalters 14 geschaltet. Der Kompressor 12 verdichtet das Gas von einem ersten Druck auf einen zweiten höheren Druck (über Normaldruck).

Der Mischer 04 weist mindestens ein vorzugsweise rohrartiges Gehäuse 17 und mindestens ein eine Mehrzahl von Öffnungen, aufweisendes Element 18 auf. Das Gehäuse 17 des Mischers 04 weist in seinem Inneren mindestens eine Kammer zum Mischen von Gas und Flüssigkeit auf. Die Öffnungen des mindestens einen Elementes 18 weisen vorzugsweise zumindest mit einer Komponente in Richtung der Durchflussrichtung des Mischers 04. Dieses mindestens eine Element 18 ist als entnehmbarer Einsatz ausgeführt. An einem eingangsseitigen Ende des Gehäuses 17 sind die beiden Rückschlagventile 09, 13 angeordnet, insbesondere direkt mit dem Gehäuse 17 verbunden, vorzugsweise eingeschraubt. Die beiden Rückschlagventile 09, 13 sind jeweils als eine Einheit und/oder als ein Modul ausgebildet.

Die beiden Rückschlagventile 09, 13 (d.h. deren Längsachsen) sind vorzugsweise in einer Ebene angeordnet und schließen vorzugsweise einen stumpfen Öffnungswinkel alpha a, insbesondere von 120° bis 160°, ein.

Die beiden Rückschlagventile 09, 13 führen die Flüssigkeit und das Gas in den Mischer 04, so dass die Flüssigkeit und das Gas aufeinanderprallen. Flüssigkeit und Gas weisen jeweils beim Eintritt in den Mischer 04 eine Richtung auf, die mindestens eine Komponente in Richtung Längsachse des Mischers 04, vorzugsweise in Richtung des Auslassventils 06, aufweist. Somit werden Flüssigkeit und Gas gut durchmischt und in Richtung ausgangsseitiges Ende des Mischers 04 transportiert.

An einem ausgangsseitigen Ende des Gehäuses 17 ist das Auslassventil 06 angeordnet, insbesondere direkt mit dem Gehäuse 17 vorzugsweise starr und/oder formschlüssig verbunden, vorzugsweise angeschraubt.

Unter dem ausgangsseitigen Ende und eingangsseitigen Ende des Gehäuses ist vorzugsweise eine Länge ab der jeweiligen Stirnseite von weniger als 20 % der Gesamtlänge I17 des Gehäuses 17 des Mischers 04 zu verstehen.

Der Mischer 04 ist zumindest teilweise an einem Gehäuse des Gerätes 01, vorzugsweise an einer Innenseite einer Stirnwand 23 des Gehäuses des Gerätes 01 angeordnet, vorzugsweise befestigt. Das ausgangsseitige Ende des Mischers 04 wirkt mit einer Öffnung der Stirnwand 23 des Gehäuses des Gerätes 01 zusammen und/oder ist gegenüberliegend angeordnet, so dass das mindestens eine mindestens eine Öffnung aufweisende Element 18 durch die Öffnung der Stirnwand 23 des Gehäuses des Gerätes 01 aus dem Mischer 04 entnehmbar ist.

Vorzugsweise ist die Längsachse des Mischers 04 horizontal angeordnet. Insbesondere ragt das ausgangsseitige Ende des Mischers 04 durch die Öffnung der Stirnwand 23 hindurch und/oder ist hindurchgeführt. Auf einer Außenseite der Stirnwand 23 ist das Auslassventil 06 angeordnet. Das ausgangsseitige Ende des Mischers 04 ist an der Innenseite der Stirnwand 23 und das Auslassventil 06 ist vorzugsweise an der Außenseite dieser Stirnwand 23 angeordnet. Vorzugsweise ist an dieses durch die Stirnwand 23 hindurchgeführte, ausgangsseitige Ende des Mischers 04 das Auslassventil 06 starr und/oder formschlüssig befestigt, insbesondere angeschraubt. Vorzugsweise weist das ausgangsseitige Ende ein Außengewinde auf, auf das das Auslassventil 06 mittels einer Überwurfmutter angeschraubt ist.

Insbesondere ist das mindestens eine Element 18 als Strahlregler (z.B. Perlator) und/oder Durchflussbegrenzer und/oder Durchflussmengenregler ausgebildet. Dazu sind vorzugsweise Siebelemente und/oder Siebgewebe und/oder Lochelemente und/oder Drahtgewebe und/oder Sintermetall und/oder Kugeleinheiten einlagig oder mehrlagig vorgesehen.

Jeder dieser Elemente 18 oder mehrere dieser Elemente 18 ist/sind in einem Modul 19 angeordnet. Jedes Modul 19 weist einen Träger 21 und/oder Rahmen auf. In diesem Träger 21 und/oder Rahmen ist mindestens ein die Mehrzahl von Öffnungen aufweisendes Element 18 angeordnet. Jedes dieser Module 19 ist selbsttragend. Der Träger 21 und/oder Rahmen ist vorzugsweise kreisringartig, insbesondere als Hohlzylinder ausgebildet. In diesem Fall ist das Öffnungen aufweisende Element 18 vorzugsweise als Kreisscheibe ausgebildet.

Im vorliegenden Ausführungsbeispiel sind in Durchflussrichtung des Mischers 04 mehrere dieser Elemente 18 und/oder Module 19 angeordnet, wobei die Anzahl der Elemente 18 und/oder Module 19 variabel und/oder wählbar ist.

Eine Mehrzahl dieser Module 19 sind insbesondere vorzugsweise formschlüssig und/oder reibschlüssig und/oder stoffschlüssig miteinander verbunden (z.B. mittels Gewinde oder Bajonettverschluss). Die Module greifen vorzugsweise ineinander ein. Die Module 19 sind vor dem Einsetzen in das Gehäuse 17 des Mischers 04 vormoniert und bilden somit eine Vormontagegruppe und/oder können gemeinsam aus dem Mischer 04 entnommen werden. Die miteinander verbundenen Module 19 können gleichartige die Öffnungen aufweisende Elemente 18 oder auch verschiedenartige die Öffnungen aufweisende Elemente 18 (sich in Anzahl und/oder Größe und/oder Richtung und/oder Form der Öffnungen; einlagig oder mehrlagig) aufweisen.

Die die Öffnungen aufweisenden Elemente 18 sind beanstandet (beispielsweise ist der Abstand zwischen zwei die Öffnungen aufweisenden Elemente 18 größer als die dreifache Dicke der die Öffnungen aufweisenden Elemente 18) zueinander angeordnet. Dadurch bildet sich vorzugsweise in jedem Modul 19 eine Kammer.

Beispielsweise durch Öffnen des Auslassventils 06 fällt der Druck im Leistungssystem des Gerätes 01 ab, so dass der Kompressor und somit die Pumpe 07 betätigt wird.

Mittels der Pumpe 07 wird die Flüssigkeit durch den mindestens einen Kühler 08 und das Rückschlagventil 09 dem Mischer 04 zugeführt. Gleichzeitig wird durch den Kompressor verdichtetes Gas durch das andere Rückschlagventil 13 dem Mischer 04 zugeführt. Innerhalb des Gehäuses 17 des Mischers 04 wird die Flüssigkeit mit dem Gas vermischt und das Gemisch dem mindestens einen Element 18, vorzugsweise der Mehrzahl von Elementen 18 nacheinander zugeführt. Dadurch wird die Flüssigkeit aufgeschäumt und/oder karbonisiert. Anschließend kann die aufbereitete Flüssigkeit, insbesondere der aufgeschäumte und gekühlte Kaffee durch Betätigen des Auslassventils 06 dem Gerät 01 entnommen werden.

### Eine Reinigung des Gerätes erfolgt folgendermaßen:

Vorzugsweise wird zunächst bei einer Reinigung, insbesondere Vorreinigung, das Auslassventil 06 von dem Mischer 04 demontiert. Anschließend werden die Elemente 18 und Module 19 aus dem Gehäuse 17 des Mischers 04, vorzugsweise durch die Öffnung der Stirnwand 23 des Gehäuses des Gerätes 01 und/oder durch eine sich durch das demontierte Auslassventil 06 freiwerdende Öffnung des Mischers 04, entnommen sowie voneinander getrennt. Diese Elemente 18 und/oder Module 19 werden beispielsweise mit einer Reinigungsflüssigkeit (z.B. warmes Wasser) gereinigt und anschließend wieder zusammengefügt und in das Gehäuse 17 des Mischers 04 eingesetzt. Anstelle der Reinigung der Elemente 18 und/oder Module 19 kann auch ein Austauschen dieser Elemente 18 und/oder Module 19 erfolgen. Durch die Anordnung des Mischers 04 an der Innenseite der Stirnwand 23 des Gehäuses kann bei demontierten Auslassventil 06 der Mischer 04 zur Reinigung im Gerät 01 bleiben. Nun wird das Auslassventil 06 an den Mischer 04 montiert.

Somit ist die optionale Vorreinigung abgeschlossen.

Zur Reinigung wird die erste Quelle 02 für die Flüssigkeit beispielsweise von der Bag-in-Box getrennt und mit einem Behälter für Reinigungsmittel verbunden. Damit führt die erste Quelle 02 Reinigungsflüssigkeit. Zusätzlich wird insbesondere das dem Kompressor 12 in Richtung Mischer 04 nachgeordnete Ventil 22 geschlossen, so dass das Rückschlagventil 13 und/oder der Mischer 04 nicht mit Gas beaufschlagt wird.

Die Pumpe 07 wird beispielsweise durch das vom Kompressor 12 geförderte Gas betätigt und fördert somit Reinigungsflüssigkeit in Richtung Mischer 04.

Vorzugsweise wird unter dem Auslassventil 06 ein Behälter angeordnet.

Das Auslassventil 06 wird geöffnet. Somit fördert die Pumpe 07 Reinigungsflüssigkeit in den Mischer 04 bis zu dem Auslassventil 06 und/oder durch das geöffnete Auslassventil 06 beispielsweise in den Behälter. In dem Reinigungsbetrieb ist der Mischer 04 mit der mindestens einen ersten Quelle 02 für Reinigungsflüssigkeit verbunden und/oder die Reinigungsflüssigkeit wird durch den Mischer 04 gefördert.

Vorzugsweise wird das Auslassventil 06 geschlossen. Dadurch kann die Reinigungsflüssigkeit beispielsweise einige Minuten einwirken. Vorzugsweise wird nach der Einwirkzeit das Auslassventil 06 geöffnet, so dass die Pumpe 07 wiederholt Reinigungsflüssigkeit in den Mischer 04 bis zu dem Auslassventil 06 und/oder durch das geöffnete Auslassventil 06 beispielsweise in den Behälter fördert. Diese beiden Vorgänge (Reinigungsflüssigkeit in den Mischer 04 fördern und anschließend Einwirken der Reinigungsflüssigkeit) können mehrfach wiederholt werden. Auch kann bei einem Reinigungsvorgang das Ventil 22 geöffnet sein, so dass die Reinigungsflüssigkeit und das Gas durchmischt werden. Reinigungsvorgänge mit Reinigungsflüssigkeit und mit oder ohne Gas können mehrfach wiederholt und wechselnd durchgeführt werden.

Anschließend wird die erste Quelle 02 von der Reinigungsflüssigkeit getrennt und mit Wasser, insbesondere Trinkwasser und/oder Leitungswasser für einen Spülvorgang verbunden. Die Pumpe 07 wird beispielsweise durch das vom Kompressor 12 geförderte Gas betätigt und fördert somit Wasser in den Mischer 04 bis zu dem Auslassventil 06 und/oder durch das geöffnete Auslassventil 06 beispielsweise in den unter dem Auslassventil 06 angeordneten Behälter. Vorzugsweise wird nach und/oder während des Spülvorgangs das aus dem Auslassventil 06 austretende Wasser (beispielsweise optisch, vorzugsweise in Bezug auf Klarheit und/oder pH-Wert, insbesondere mittels eines Sensors) kontrolliert. Nach Kontrolle des aus dem Auslassventil 06 austretenden Wasser wird der Spülvorgang beendet. Das Auslassventil 06 wird oder ist geschlossen.
Die erste Quelle 02 wird von dem Wasser getrennt und mit der aromatisierten Flüssigkeit beispielsweise mit der Bag-in-Box verbunden. Die Pumpe 07 wird beispielsweise durch das vom Kompressor 12 geförderte Gas betätigt und fördert somit aromatisierte Flüssigkeit in den Mischer 04 bis zu dem Auslassventil 06 und/oder durch das geöffnete Auslassventil 06 beispielsweise in den Behälter. Das Auslassventil 06 wird bei noch geschlossenem oder bereits geöffnetem Ventil 22 geschlossen.
Das dem Kompressor 12 in Richtung Mischer 04 nachgeordnete Ventil 22 wird geöffnet, so dass das Rückschlagventil 13 und/oder der Mischer 04 mit Gas beaufschlagt wird. Das Gerät 01 zur Ausgabe und/oder Herstellung von Getränken, insbesondere die Kaffeemaschine 01, ist betriebsbereit.

### Bezugszeichenliste

- 01: Gerät, Kaffeemaschine
- 02: Quelle, erste
- 03: Quelle, zweite
- 04: Mischer
- 05: -
- 06: Auslassventil, Zapfhahn
- 07: Pumpe
- 08: Kühler
- 09: Rückschlagventil
- 10: -
- 11: Filter
- 12: Kompressor
- 13: Rückschlagventil
- 14: Druckschalter
- 15: -
- 16: Druckregelventil
- 17: Gehäuse
- 18: Element
- 19: Modul
- 20: -
- 21: Träger
- 22: Ventil
- 23: Stirnwand

- I17: Gesamtlänge
- α: Öffnungswinkel

## Patentansprüche

1. Gerät (01) zur Ausgabe und/oder Herstellung von Getränken, insbesondere Kaffeemaschine (01), mit mindestens einer ersten Quelle (02) für eine Flüssigkeit, insbesondere Kaffee, mit mindestens einer zweiten Quelle(03) für ein Gas, insbesondere Luft, mit mindestens einem Mischer (04) und mit mindestens einem Auslassventil (06), wobei der Mischer (04) mit der mindestens einen ersten Quelle (02) für die Flüssigkeit und der mindestens einen zweiten Quelle (03) für das Gas verbunden ist, wobei der Mischer (04) mindestens ein Gehäuse (17) und mindestens ein eine Mehrzahl von Öffnungen aufweisendes Element (18) aufweist, wobei ein ausgangsseitiges Ende des Mischers (04) mit einer Öffnung einer Stirnwand (23) eines Gehäuses des Gerätes (01) zusammenwirkt und/oder gegenüberliegend angeordnet ist, **dadurch gekennzeichnet, dass** das mindestens eine eine Mehrzahl von Öffnungen aufweisende Element (18) in einem Modul (19) angeordnet ist, dass das Modul (19) jeweils einen Träger (21) und/oder Rahmen aufweist und dass in diesem Träger (21) und/oder Rahmen das mindestens eine die Mehrzahl von Öffnungen aufweisende Element (18) angeordnet ist..

2. Gerät nach Anspruch 1, **dadurch gekennzeichnet, dass** zwischen der mindestens einen ersten Quelle (02) für die Flüssigkeit und dem Mischer (04) mindestens eine Pumpe (07) angeordnet ist und dass zwischen der mindestens einen zweiten Quelle (03) für das Gas und dem Mischer (04) mindestens ein Kompressor (12) angeordnet ist.

3. Gerät nach Anspruch 2, **dadurch gekennzeichnet, dass** zwischen der mindestens einen ersten Quelle (02) für die Flüssigkeit, dem Mischer (04) und der mindestens einen Pumpe (07) mindestens ein Kühler (08) angeordnet ist.

4. Gerät nach Anspruch 1 und/oder 2 und/oder 3, **dadurch gekennzeichnet, dass** das ausgangsseitige Ende des Mischers (04) durch eine Öffnung einer Stirnwand (23) des Gehäuses des Gerätes (01) hindurchgeführt ist und dass an diesem durch die Stirnwand (23) hindurchgeführten, ausgangsseitigen Ende des Mischers (04) das Auslassventil (06) befestigt ist.

5. Gerät nach Anspruch 1 und/oder 2 und/oder 3 und/oder 4, **dadurch gekennzeichnet, dass** das Auslassventil (06) direkt mit dem Gehäuse (17) verbunden ist.

6. Gerät nach Anspruch 1 und/oder 2 und/oder 3 und/oder 4 und/oder 5, **dadurch gekennzeichnet, dass** an einem eingangsseitigen Ende des Gehäuses (17) zwei Rückschlagventile (09, 13) angeordnet sind und dass die zwei Rückschlagventile (09, 13) direkt mit dem Gehäuse (17) verbunden sind.

7. Gerät nach Anspruch 1, **dadurch gekennzeichnet, dass** in dem Mischer (04) mehrere dieser Module (19) hintereinander angeordnet sind.

8. Gerät nach Anspruch 1 und/oder 7, **dadurch gekennzeichnet, dass** mehrere dieser Module (19) formschlüssig und/oder reibschlüssig und/oder stoffschlüssig miteinander verbunden sind.

9. Gerät nach Anspruch 8, **dadurch gekennzeichnet, dass** die verbundenen Module (19) außerhalb des Mischers (04) vormontiert und/oder gemeinsam aus dem Mischer (04) entnehmbar sind.

10. Gerät nach Anspruch 7 und/oder 8 und/oder 9, **dadurch gekennzeichnet, dass** die mehreren Module (19) verschiedenartige die Öffnungen aufweisende Elemente (18) aufweisen.

11. Gerät nach Anspruch 7 und/oder 8 und/oder 9 und/oder 10, **dadurch gekennzeichnet, dass** die Anzahl der Module (19) variabel und/oder wählbar ist.

12. Gerät nach Anspruch 1 und/oder 7 und/oder 8 und/oder 9 und/oder 10 und/oder 11, **dadurch gekennzeichnet, dass** der Träger (21) und/oder Rahmen als Hohlzylinder und das Öffnungen aufweisende Element (18) als Kreisscheibe ausgebildet sind.

13. Gerät nach Anspruch 1 und/oder 2 und/oder 3 und/oder 4 und/oder 5 und/oder 6 und/oder 7 und/oder 8 und/oder 9 und/oder 10 und/oder 11 und/oder 12, **dadurch gekennzeichnet, dass** das mindestens eine eine Mehrzahl von Öffnungen aufweisende Element (18) als Strahlregler, insbesondere Perlator, und/oder Durchflussbegrenzer und/oder Durchflussmengenregler ausgebildet ist.

14. Gerät nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13, **dadurch gekennzeichnet, dass** als das mindestens eine eine Mehrzahl von Öffnungen aufweisendes Element (18) ein Siebelement und/oder Siebgewebe und/oder Lochelement und/oder Drahtgewebe und/oder Sintermetall und/oder eine Kugeleinheit vorgesehen ist.

15. Gerät nach Anspruch 2, **dadurch gekennzeichnet, dass** dieser Kompressor (12) die mindestens eine Pumpe (07) betätigend angeordnet ist.

## Claims

1. An appliance (01) for dispensing and/or preparing beverages, in particular a coffee machine (01), having at least one first source (02) for a liquid, in particular coffee, having at least one second source (03) for a gas, in particular air, having at least one mixer (04) and having at least one outlet valve (06), wherein the mixer (04) is connected to the at least one source (02) for the liquid and the at least one second source (03) for the gas, wherein the mixer (04) has at least one housing (17) and at least one element (18) having a plurality of openings, wherein an end of the mixer (04) on the output side interacts with an opening of a front wall (23) of a housing of the appliance (01) and/or is arranged opposite, **characterized in that** the at least one element (18) having a plurality of openings is arranged in a module (19), that the module (19) has in each case a rack (21) and/or frame and that the at least one element (18) having the plurality of openings is arranged in this rack (21) and/or frame.

2. The appliance according to claim 1, **characterized in that** at least one pump (07) is arranged between the at least one first source (02) for the liquid and the mixer (04) and that at least one compressor (12) is arranged between the at least one second source (03) for the gas and the mixer (04).

3. The appliance according to claim 2, **characterized in that** at least one cooler (08) is arranged between the at least one source (02) for the liquid, the mixer (04) and the at least one pump (07).

4. The appliance according to claim 1 and/or 2 and/or 3, **characterized in that** the output-side end of the mixer (04) is guided through an opening of a front wall (23) of the housing of the appliance (01) and that the outlet valve (06) is fastened on the output-side end of the mixer (04) guided through the front wall (23).

5. The appliance according to claim 1 and/or 2 and/or 3 and/or 4, **characterized in that** the outlet valve (06) is directly connected to the housing (17).

6. The appliance according to claim 1 and/or 2 and/or 3 and/or 4 and/or 5, **characterized in that** two check valves (09, 13) are arranged on an input-side end of the housing (17) and that the two check valves (09, 13) are directly connected to the housing (17).

7. The appliance according to claim 1, **characterized in that** several of these modules (19) are arranged in tandem in the mixer (04).

8. The appliance according to claim 1 and/or 7, **characterized in that** several of these modules (19) are connected to one another positively and/or frictionally engaged and/or by a material bond.

9. The appliance according to claim 8, **characterized in that** the connected modules (19) are pre-mounted outside of the mixer (04) and/or can be removed jointly from the mixer (04).

10. The appliance according to claim 7 and/or 8 and/or 9, **characterized in that** the several modules (19) have a wide variety of elements (18) having the openings.

11. The appliance according to claim 7 and/or 8 and/or 9 and/or 10, **characterized in that** the number of modules (19) is variable and/or selectable.

12. The appliance according to claim 1 and/or 7 and/or 8 and/or 9 and/or 10 and/or 11, **characterized in that** the rack (21) and/or frame is configured as a hollow cylinder and the element (18) having the openings is configured as a circular disk.

13. The appliance according to claim 1 and/or 2 and/or 3 and/or 4 and/or 5 and/or 6 and/or 7 and/or 8 and/or 9 and/or 10 and/or 11 and/or 12, **characterized in that** the at least one element (18) having a plurality of openings is configured as a jet regulator, in particular a perlator and/or flow restrictor and/or flow volume regulator.

14. The appliance according to claim 1 and/or 2 and/or 3 and/or 4 and/or 5 and/or 6 and/or 7 and/or 8 and/or 9 and/or 10 and/or 11 and/or 12 and/or 13, **characterized in that** a screen element and/or screen fabric and/or hole element and/or wire fabric and/or sintered metal part and/or a ball unit is provided as the at least one element (18) having a plurality of openings.

15. The appliance according to claim 2, **characterized in that** the at least one pump (07) is arranged to actuate this compressor (12).

## Revendications

1. Appareil (01) destiné à distribuer et/ou fabriquer des boissons, en particulier une machine à café (01), avec au moins une première source (02) pour un liquide, en particulier du café, avec au moins une seconde source (03) pour un gaz, en particulier de l'air, avec au moins un mélangeur (04) et avec au moins un clapet de décharge (06), dans lequel le mélangeur (04) est raccordé à la au moins une première source (02) pour le liquide et la au moins une seconde source (03) pour le gaz, dans lequel le mélangeur (04) présente au moins un logement (17) et au moins un élément (18) qui présente une pluralité d'orifices, dans lequel l'extrémité côté sortie du mélangeur (04) coopère avec un orifice d'une paroi frontale (23) d'un logement de l'appareil (01) et/ou est agencée à l'opposé, **caractérisé en ce que** le au moins un élément (18) qui présente une pluralité d'orifices est agencé dans un module (19), **en ce que** le module (19) présente respectivement un support (21) et/ou cadre, et **en ce que** dans ce support (21) et/ou cadre est agencé le au moins un élément (18) qui présente une pluralité d'orifices.

2. Appareil selon la revendication 1, **caractérisé en ce qu'**au moins une pompe (07) est agencée entre la au moins une première source (02) pour le liquide et le mélangeur (04) et **en ce qu'**au moins un compresseur (12) est agencé entre la au moins une seconde source (03) pour le gaz et le mélangeur (04).

3. Appareil selon la revendication 2, **caractérisé en ce qu'**au moins un refroidisseur (08) est agencé entre la au moins une première source (02) pour le liquide, le mélangeur (04) et la au moins une pompe (07).

4. Appareil selon la revendication 1 et/ou 2 et/ou 3, **caractérisé en ce que** l'extrémité côté sortie du mélangeur (04) est guidée à travers un orifice de la paroi frontale (23) du logement de l'appareil (01) et **en ce que** le clapet de décharge (06) est fixé à cette extrémité côté sortie du mélangeur (04) guidée à travers la paroi frontale (23).

5. Appareil selon la revendication 1 et/ou 2 et/ou 3 et/ou 4, **caractérisé en ce que** le clapet de décharge (06) est directement raccordé au logement (17).

6. Appareil selon la revendication 1 et/ou 2 et/ou 3 et/ou 4 et/ou 5, **caractérisé en ce que** deux clapets anti-retour (09, 13) sont agencés à une extrémité côté entrée du logement (17) et **en ce que** les deux clapets anti-retour (09, 13) sont directement raccordés au logement (17).

7. Appareil selon la revendication 1, **caractérisé en ce que** plusieurs de ces modules (19) sont agencés les uns derrière les autres dans le mélangeur (04).

8. Appareil selon la revendication 1 et/ou 7, **caractérisé en ce que** plusieurs de ces modules (19) sont raccordés les uns aux autres par complémentarité de forme et/ou par adhérence et/ou par liaison de matière.

9. Appareil selon la revendication 8, **caractérisé en ce que** les modules (19) raccordés sont pré-montés hors du mélangeur (04) et/ou peuvent être retirés ensemble du mélangeur (04).

10. Appareil selon la revendication 7 et/ou 8 et/ou 9, **caractérisé en ce que** les plusieurs modules (19) présentent des éléments (18) hétérogènes qui présentent les orifices.

11. Appareil selon la revendication 7 et/ou 8 et/ou 9 et/ou 10, **caractérisé en ce que** le nombre des modules (19) est variable et/ou sélectionnable.

12. Appareil selon la revendication 1 et/ou 7 et/ou 8 et/ou 9 et/ou 10 et/ou 11, **caractérisé en ce que** le support (21) et/ou cadre est formé en tant que cylindre creux et l'élément (18) qui présente des orifices est formé en tant que disque circulaire.

13. Appareil selon la revendication 1 et/ou 2 et/ou 3 et/ou 4 et/ou 5 et/ou 6 et/ou 7 et/ou 8 et/ou 9 et/ou 10 et/ou 11 et/ou 12, **caractérisé en ce que** le au moins un élément (18) qui présente une pluralité d'orifices est formé en tant que régulateur de jet, en particulier Perlator, et/ou limitateur d'écoulement et/ou régulateur de quantité d'écoulement.

14. Appareil selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13, **caractérisé en ce qu'**en tant que le au moins un élément (18) qui présente une pluralité d'orifices est prévu un(e) élément de tamisage et/ou toile de tamisage et/ou élément formant trou et/ou toile métallique et/ou métal fritté et/ou une unité de billes.

15. Appareil selon la revendication 2, **caractérisé en ce que** ce compresseur (12) est agencé de manière à actionner la au moins une pompe (07).
